# EUROPEAN PATENT APPLICATION

(11) **EP 0 915 319 A1**
(43) Date of publication of application: **12.05.1999**
(21) Application number: 98307889.0
(22) Date of filing: 29.09.1998
(51) Int. Cl.: G01B 7/00, G01P 15/00, G01P 3/00, G01B 3/00, G01D 5/14

(54) **Moving body and means for detecting position thereof**

(30) Priority: 06.11.1997 JP 319140/97
(71) Applicant: ISUZU CERAMICS RESEARCH INSTITUTE CO., LTD., Fujisawa-shi, Kanagawa-ken (JP)
(72) Inventor: Kawamura, Hideo, Kouza-gun, Kanagawa-ken 253-0105 (JP)
(74) Representative: Jenkins, Peter David

(57) **Abstract**

The present invention provides a moving body of ceramics having discriminating marks and supported for movement with respect to a base member, and further provides means capable of detecting with high accuracy the position of the moving body, which is submerged or in high temperature atmosphere.

The means is to detect the position of the moving body, or a shaft(1) supported for sliding movement to a mounting base(2) through bearings(9). The shaft(1) is provided on the periphery thereof with discriminating marks(3) of magnetic stripes having predetermined widths. A magnetic sensor(4) is mounted on the base member(2). The discriminating marks(3) are composed of magnetic recognition marks(5) and nonmagnetic recognition marks(6), the magnetic recognition marks(5) being made of a paste containing iron therein and the nonmagnetic recognition marks(6) being made of a ceramic paste, both of the pastes are printed on a sheet in such a manner that they are alternately applied in the form of stripes with predetermined widths. The shaft is impregnated with the sheet under pressure to thereby form the discriminating marks(3) on the shaft(1).

## Description

The present invention relates to a moving (or moveable) body such as a rotating shaft, reciprocating shaft, sliding element and the like which is used incorporated in, for example, vehicles for electric cars, parts of engines, printers, sheet feeders, submerged machinery or the like.

The present invention further relates to means for detecting the position of the moving body.

It is well known that the position detecting means such as photo sensors, notch-marked moving bodies or the like have been conventionally required to detect the positions of the moving bodies such as reciprocating bodies or rotating bodies which are usually in the high temperature atmosphere or adverse environment.

Disclosed in Japanese Patent Laid-Open No. 229739/1993 is a bobbin with a built-in magnetic marker. This prior bobbin is provided with magnetic markers for discriminating threads wound around the bobbin and has for its object to protect the magnetic markers from the deformation in shape as well as the reduction in strength under the influence of operated conditions. To stably keep magnetic markers out of the deformation and damage due to the external force caused by the high speed rotation of the bobbin, the cited prior art discloses a nonmagnetic core having magnetic markers secured by any suitable fitting means. The core has been fixed in the bobbin by synthetic resin molding in which the core is embedded in the bobbin in concentric and integral with the bobbin. Alternatively, the bobbin has been disclosed in which the core was concentrically attached to the inner surface of the bobbin by adhesion.

Further shown in Japanese Patent Laid-Open No. 113482/1992 is an apparatus for reading discriminating marks, which are printed on sheets secured around the rotary drum. The prior art has been preferred for quality inspection of bar codes, for example, magnetic codes printed on plastic sheets, or for speed control of the rotary drum.

The position detecting apparatus with the photo sensor has been useless for the detection of the submerged body that moves in cloudy water or seawater. The notch-marked moving body has been difficult to be detected for the rotary body, that are usually supplied with lubricating oil in, for example, machinery such as turbo-superchargers, dynamo-electric turbines or the like. Another conventional position detecting means with a magnetically marked moving body has been inferior in reliability on stable long-life operation in, especially, high temperature atmosphere. The magnetic marks on rotating or relative linear sliding surface has been subjected to the abrasion of the relative moving bodies or the increase in the sliding friction resistance, with resulting in a lack of operational reliance.

On the other hand, the movable shafts such as rotating shafts, linear sliding shafts or the like have to be high in hardness, and superior in absorption for lubricating oil and in profile irregularity. It will be known Fe₃O₄ is superior in an affinity for lubricating oil, resulting in improvement in lubrication property. It is thus recommended to impregnate the ceramic shaft of Si₃N₄ or the like with Fe₃O₄. Such shafts may become magnetized as well as satisfy the requirements of good absorption for lubricating oil and of high profile irregularity.

An aim of the present invention is to overcome the shortcomings as described above with reference to the prior art, and to provide a moving body for linear sliding or rotating movement made of composite containing iron therein, under favor of the phenomenon the ferrous composite becomes magnetized in case where silicon nitride is mixed with iron, and the moving body being formed thereon with discriminating marks of magnetic striped patterns.

Another aim of the present invention is to provide means for detecting the position of the moving body, in which a magnetic sensor makes detection of the magnetic striped patterns on the moving body to thereby determine the position of the moving body and further a velocity sensor of combined magnetic and time sensors makes detection of the velocity as well the accelaration of the moving body to thereby control the rotating or linear sliding movement of the moving body in response with the detection signals.

An additional aim of the present invention is to provide a ceramic body supported for movement with respect to a base member, wherein the ceramic body is provided on the periphery thereof with discriminating marks of magnetic stripes predetermined so as to be detected by a magnetic sensor whereby the movement of the ceramic body may be controlled in response to the detection signals according to the discriminating marks.

The ceramic body for relative movement is composed of any one of a rotating member and linear sliding member, and also the magnetic stripes on the ceramic body is composed of ceramic composite with iron.

Another aim of the present invention is to provide position detecting means for ceramic body supported for movement with respect to the base member, wherein the discriminating marks of predetermined widths extend on theperiphery of the moving body in the direction across the moving direction of the body at locations spaced from each other with predetermined intervals along the moving body, and a magnetic sensor is mounted on the base member for reading out the discriminating marks, and wherein the discriminating marks are composed of magnetic recognition marks and nonmagnetic recognition marks, both of which are alternately arranged with predetermined widths in a spaced relation from each other, the magnetic recognition marks being made of a paste containing iron therein, while the nonmagnetic recognition marks being of a paste containing powdered silicon nitride therein, and the discriminating marks are formed by the steps of preparing both ferrous paste for the magnetic recognition marks containing iron therein and non-ferrous paste for the nonmagnetic recognition marks containing powdered silicon nitride therein, printing sheets with the ferrous paste and non-ferrous paste in such a manner that both of the pastes are alternately applied with predetermined widths, and then impregnating the moving body of ceramics with the printed sheets under pressure.

The moving body may be of a shaft supported for linear sliding movement in the base member and the discriminating marks of stripes are printed so as to extend in the peripheral direction of the shaft at locations spaced from each other in the axial direction of the shaft. Alternatively, the moving body may be of a shaft supported for rotation in the base member and the discriminating marks are printed so as to extend in the axial direction of the shaft in spaced relation from each other circumferentially of the shaft.

As regards the fabrication of the moving body, homogeneous admixture is first prepared by kneading mixture of Fe₃O₄ with powdered silicon nitride and other additives. The admixture is further kneaded with solvent thereby to form a pasty substance, which is then applied for printing on the moving body such as the linear sliding shaft or rotating shaft composed of silicon nitride. In order to reduce the abrasion caused between the moving body and the base member, it is preferred to fabricate the outer periphery of the moving body by a mixture of ceramics with iron oxide such as FeO, Fe₂O₃ or Fe₃O₄, the mixture being capable of remarkably reducing the frictional resistance of the moving body against the base member.

The formation of the discriminating marks on the moving body may be easily carried out by sintering the roasted ceramics for the moving body, which has been previously impregnated with the sheet for the discriminating marks under pressure.

The pasty substance is composed of silicon nitride in the range of from 75 to 93% by weight, additives such as Al₂O₃, Y₂O₃ or the like of from 2 to 10% by weight and Fe₃O₄ of from 5 to 15% by weight.

The moving body is further coated on the periphery thereof with the paste containing silicon nitride therein, except the locations printed with the discriminating marks.

The magnetic sensor is to detect the position of the moving body by reading out the widths of the discriminating marks.

The combined magnetic sensor with the time sensor may provide a velocity sensor for detecting the velocity and the acceleration of the moving body.

The position detecting means may provide easily the information about position, velocity, acceleration and the like of the moving body by reading out the widths of the discriminating marks that have been magnetized with Fe₃O₄ and applied with different widths on the moving body of rotating or linear sliding shaft made of ceramics of Si₃N₄ or the like.

The discriminating marks on the moving body is superior in wear proof and also lower in coefficient of friction, so that the marks are fadeless and thus rich in reliability of detection even in the machinery that operates under sever conditions where it is submerged or exposed to high temperature, high friction or the like. The moving body has thereon the discriminating marks of stripes containing Fe₃O₄, which marks are each defined with other cross stripes. In particular, discriminating marks are formed with parts rich in Fe₃O₄ and parts of non-Fe₃O₄, both of which parts are arranged in bar code type. It will be thus understood that the magnetic sensor responds magnetically to the discriminating marks to therebyrecognize the position of the moving body. Accordingly, the position detecting means of the present invention may be advantageously employed in various electric parts, rotating shafts for the submerged pumps and the like, or in movable parts for valve actuators, which are equipped in the zones where the photo sensor is never used because of being exposed to high temperature exhaust gases.

The position detecting means of the present invention as described above is rich in extremely stable reliability in operation and capable of detection with high accuracy for linear displacement, angular displacement, velocity, acceleration and the like, which detected data may be effectively adapted for information processing or the like. The position detecting means according this invention will be especially applicable to the moving bodies of linear sliding or rotating parts, which may be subjected to severe temperature or heavy friction, for example, axles for electric cars, control valves exposed to high temperature exhaust gases, or linear sliding and rotating shafts incorporated in printers used in office automation appliances, sheet feeders and the like. This invention is also useful for the bearings or sliding elements supplied with lubricating oil, and further preferred to be applied to the moving bodies incorporated in submerged machinery, which operates in seawater or liquids contaminated with chemicals, lubricating oil or impurities.

Other aims and features of the present invention will be more apparent to those skilled in the art on consideration of the accompanying drawings and following specification wherein are disclosed preferred embodiments of the invention with the understanding that such variations, modifications and elimination of parts may be made therein as fall within the scope of the appended claims without departing from the spirit of the invention.

Embodiments of the present invention will now be described, by way of example only, with reference to the accompanying drawings, in which:-
FIG. 1 is a schematic perspective view showing a first preferred embodiment of a moving body and position detecting means for the moving body according to the present invention;
FIG. 2 is a schematic sectional view illustrating a bearing arrangement in the first embodiment shown in FIG. 1;
FIG. 3 is a sectional view of a second embodiment in which a valve mechanism has combined with the first embodiment shown in FIG. 1;
FIG. 4 is a schematic perspective view showing a third embodiment of a moving body and position detecting means for the moving body according to the present invention;
FIG. 5 is a sectional view showing a forth embodiment in which a turbo-supercharger has an AC motor having combined with the third embodiment shown in FIG. 4; and
FIG. 6 is a sectional view showing a fifth embodiment in which a dynamo-electric turbine has combined with the third embodiment shown in FIG. 4.

Referring now in detail to the drawings, the moving body and position detecting means according to the present invention will be explained below.

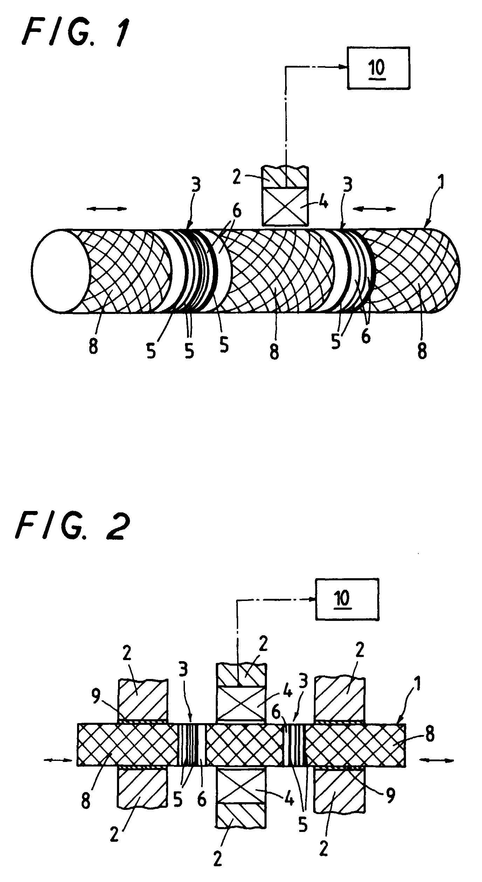

Referring to FIGS. 1 and 2 showing the first embodiment of the present invention, a moving body in the first embodiment is adapted to a ceramic shaft 1 movable in a reciprocating manner with respect to a base member 2. The ceramic shaft 1 is provided on the periphery thereof with discriminating marks 3 of magnetic strips which are arranged with predetermined widths so as to be detected by means of a magnetic sensor 4 on the base member 2. A controller unit 10, in response to detection signals from the discriminating marks 3, may control the reciprocating motion of the ceramic shaft 1.

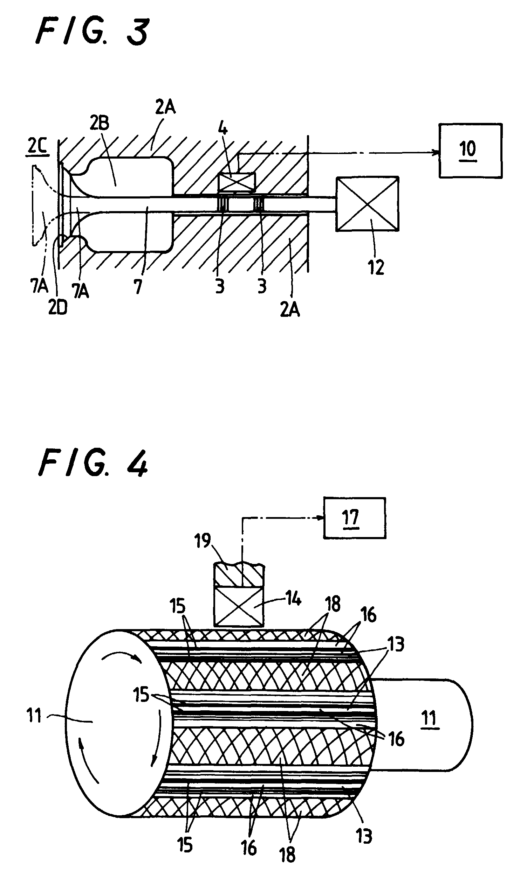

Position detecting means in the moving body of the first embodiment may be applicable to the reciprocating shaft 1 such as a valve stem in a valve mechanism, refer to FIG. 3, or a sliding element for the detection of the position of the shaft 1. The position detecting means is to detect the position of the shaft 1 mounted for reciprocating movement to the base member 2 through bearings 9. The position detecting means comprises the discriminating marks 3 each having a predetermined width in the direction across the reciprocating, or advance or retreat direction of the shaft 1. The discriminating marks 3 of the predetermined widths extend around the periphery of the shaft 1 at locations spaced from each other with discrete intervals along the axial direction of the shaft 1. Mounted on the base member 2 is the magnetic sensor 4 for reading out the discriminating marks 3.

In the second embodiment shown in FIG. 3, the base member 2 is constituted as a cylinder head, housing or the like and the shaft 1 is as a valve stem.

The discriminating marks 3 are composed of magnetic recognition marks 5 and nonmagnetic recognition marks 6, both of which extend around the periphery of the shaft 1 and are alternately arranged in a spaced relation from each other. The magnetic recognition marks 5 are made of paste containing iron therein, while the nonmagnetic recognition marks 6 are of paste containing powdered silicon nitride therein. Nonmagnetic marks 8 of cross stripes pattern are provided around the periphery of the shaft 1 except the locations of the discriminating marks 3. The magnetic recognition marks 5 and the nonmagnetic recognition marks 6 are of bar code patterns consisting of stripes, which are alternately printed around the shaft 1 with prescribed widths. The discriminating marks 3 may be formed on the shaft 1 by impregnation of bar code-marked sheets into the shaft 1 under pressure. Thus, both the magnetic recognition marks 5 and nonmagnetic recognition marks 6 of the discriminating marks 3 may be detected by means of the magnetic sensor 4 which is mounted to the base member 2 in opposition to the discriminating marks 3 on the reciprocating shaft 1. The detection signals from the magnetic sensor 4 are supplied to the controller unit 10, which recognizes the position of the shaft 1 in accordance with the detection signals from the magnetic sensor 4. It will be noted that the controller unit 10 recognize the position of the shaft 1 in accordance with the detection signals from the magnetic sensor 4 and also generates instruction signals with regard to displacement, velocity and stop of the shaft 1 in response to the detection signals to thereby control the motion of the shaft 1.

The discriminating marks 3 may be formed on the shaft 1 by the steps of preparing both ferrous paste for the magnetic recognition marks 5 containing iron therein and non-ferrous paste for the nonmagnetic recognition marks 6 containing powdered silicon nitride therein, and printing sheets with the ferrous paste and non-ferrous paste in such a manner that both of the pastes are alternately applied with predetermined widths in a spaced relation from each other. The shaft 1 of ceramics roasted at, for example, 1200 °C is impregnated with the printed sheets under pressure and then subjected to sintering at, for example, in the range of from 1700°C to 1800 °C.

The shaft 1 may constitutes a valve stem, sliding element or the like which is mounted to the base member 2 for reciprocating movement. The shaft 1 may be made of roasted silicon nitride. Iron content in the paste may be composed of any one of iron and Fe₃O₄. The shaft 1 is provided on the periphery thereof with nonmagnetic marks 8 of printed cross stripes of the paste containing silicon nitride therein, excluding the zones of the discriminating marks 3.

For example, the shaft 1 may be, as shown in FIG. 3, adapted to a valve 7A for a combustion chamber 2B provided in a cylinder head 2A. The valve 7A is driven for reciprocation by valve actuating means such as electromagnetic driving means or cam trains so as to control a communication port 2D between combustion chambers 2B and 2C.

The magnetic sensor 4 is to supply the controller unit 10 with signals in accordance with sizes in the widths of the discriminating marks 3 to thereby serve as a sensor for detecting the position of the shaft 1. The magnetic sensor 4 may be also incorporated with time sensors to form a velocity sensor for detecting the velocity and acceleration of the shaft 1 with respect to the base member 2.

Further referring FIG. 4, the present invention will be explained in connection with the third embodiment of the moving body and means for detecting the position thereof. The moving body according to the third embodiment of the present invention is applied to a ceramic shaft 11 rotatable with respect to a base member 19. The ceramic shaft 11 is provided on the periphery thereof with discriminating marks 13 of magnetic stripes, which are to be detected by a magnetic sensor 14 mounted on the base member 19. As a result, the rotation of the ceramic shaft may be controlled under the instructions of a controller unit 17 in response to the detection signals according to the discriminating marks 13.

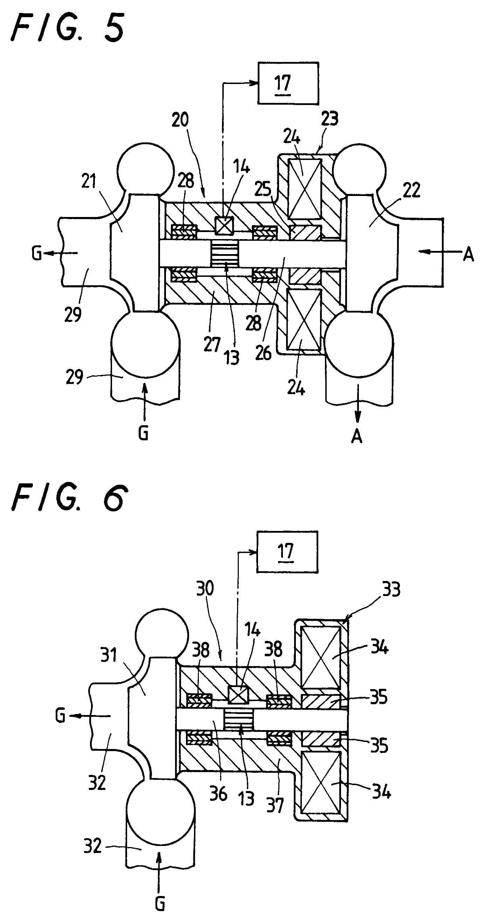

Position detecting means having the moving body of the third embodiment in the form of rotating shaft 11 may be adapted to the position detection for the rotating shafts in vehicles such as electric vehicles, in turbo-superchargers (refer to FIG. 5) and in dynamo-electric turbines (refer to FIG. 6). The rotating shaft 11 is supported for rotational movement in the base member 19 such as housing, casing or the like through bearings.

The position detecting means is to detect the angular displacement of the rotating shaft 11 mounted for rotational movement in the base member 19. The position detecting means is made of discriminating marks 13 that are arranged around the periphery of the rotating shaft 11 at predetermined locations spaced from each other circumferentially of the rotating shaft 11. The discriminating marks 3 each have a predetermined discrete width in the rotating direction and extend in the direction across the rotating direction of the shaft, that is, in the axial direction of the rotating shaft 11. Provided on the base member 19 is the magnetic sensor 14 for reading out the discriminating marks 13. The discriminating marks 13 are composed of magnetic recognition marks 15 and nonmagnetic recognition marks 16, both of which extend along the axial direction the shaft 1 and are alternately arranged in a spaced relation from each other circumferentially of the shaft 1 . The magnetic recognition marks 15 are made of paste containing iron therein, while the nonmagnetic recognition marks 16 are of paste containing powdered silicon nitride therein. The magnetic recognition marks 15 and the nonmagnetic recognition marks 16 are of magnetic bar code patterns consisting of stripes, which are alternately printed around the shaft 11 with predetermined widths.

The discriminating marks 13 in the third embodiment may be formed on the shaft 11 by the steps of preparing both ferrous paste for the magnetic recognition marks 15 containing iron therein and non-ferrous paste for the nonmagnetic recognition marks 16 containing powdered silicon nitride therein, and printing sheets with the ferrous paste and non-ferrous paste in such a manner that both of the pastes are alternately applied with predetermined widths in a spaced relation from each other to form magnetic bar code patterns. The shaft 11 of ceramics roasted at, for example, 1200°C is impregnated with the printed sheets under pressure and then subjected to sintering at, for example, in the range of from 1700°C to 1800°C.

The rotating shaft 11 is mounted for rotation in the base member 19 and composed of roasted material of silicon nitride, SiC or the like. Iron component in the paste may be composed of iron or iron oxide such as Fe₃O₄. The paste containing powdered silicon nitride therein is applied around the periphery of the shaft 11 except the locations of the discriminating marks 13 to thereby form nonmagnetic marks 18 of printed cross stripes pattern.

The magnetic sensor 14 is to supply a controller unit 17 with signals in accordance with sizes in the widths of the discriminating marks 13 to thereby serve as a sensor for recognizing the angular position of the shaft 11. The magnetic sensor 14 may be also incorporated with a time sensor to form a velocity sensor for detecting the velocity and acceleration of the shaft 11. As a result, the controller unit 17 recognizes the angular position of the shaft 11 under the detection signals from the magnetic sensor 14 and also generates instruction signals with regard to angular displacement, rotating velocity and stops of the shaft 11 in response to the detection signals to thereby control the motion of the shaft 11.

Next, FIG. 5 illustrates a turbo-supercharger 20 having incorporated therein the moving body and position detecting means therefor according the present invention.

The turbo-supercharger 20 is provided with an AC generator 23 for the recovery of heat energy from exhaust gas G. The turbo-supercharger 20 comprises a turbine 21 provided in an exhaust pipe 29 to be driven by the energy of gas exhausted out of engines, a rotating shaft 26 connected at its one end to the turbine 21 and supported for rotation by a housing 27 through bearings 28, a compressor 22 connected to the other end of the rotating shaft 26 for supercharging the engines with air A, whereby the AC generator 23 serves as a dynamotor. The AC generator 23 has comprised of a permanent magnet 25 fixed to the rotating shaft 26, and a stator 24 mounted to the base member of a housing 27 in opposition to the permanent magnet 25.

The turbo-supercharger 20 may be allowed to employ plain bearings for the bearings 28 incorporated to support the rotating shaft 26 for rotation in the housing 27. It is to be noted that the discriminating marks 13 are in substance superior in heat resistance property. Therefore, the rotating shaft 26 supported rotatably in the housing 27 makes high speed rotation in the condition exposed to the exhaust gas of high temperature, the magnetic sensor 14 in the housing 27 may nevertheless detect the discriminating marks 13 with high precision in the atmosphere contaminated with lubricating oil or the like. The magnetic sensor 14 in the housing 27 supplies the controller unit 17 with its detection signals in accordance with the discriminating marks 13 on the rotating shaft 26. With the angular position of the rotating shaft 26 being detected with high accuracy, the precious angular position of the permanent magnet 25 with respect to the stator 24 of the AC generator 23 may be applicable to the operational control of the AC generator 23.

Finally, referring to FIG. 6, the present invention will be described in connection with the fifth embodiment in which a dynamo-electric turbine has incorporated with the moving body and position detecting means therefor of this invention.

The dynamo-electric turbine 30 may be used, for instance, in combination with an exhaust pipe 32, or in combination with another exhaust pipe 32 downstream the turbo-supercharger 20 shown in FIG. 5.

The dynamo-electric turbine 30 is provided with an AC generator 33 for the recovery of heat energy from exhaust gas G. The dynamo-electric turbine 30 comprises a turbine 31 provided in an exhaust pipe 32 to be driven by the energy of gas exhausted out of engines, a rotating shaft 36 connected at its one end to the turbine 31 and supported for rotation by a housing 37 through bearings 38, and the AC generator 33 connected to the rotating shaft 36 so as to provide a dynamotor. The AC generator 33 has comprised of a permanent magnet 35 fixed to the rotating shaft 36, and a stator 34 mounted to the base member of a housing 37 in opposition to the permanent magnet 35.

The turbo-supercharger 30 may be allowed to employ plain bearings for the bearings 38 incorporated to support the rotating shaft 36 for rotation in the housing 37. It is to be noted that the discriminating marks 13 are in substance superior in heat resistance property. In the same way as the turbo-supercharger 20 in FIG. 5, the rotating shaft 36 supported rotatably in the bearings 38 makes high speed rotation in the condition exposed to the exhaust gas of high temperature, the magnetic sensor 14 in the housing 37 may nevertheless detect the discriminating marks 13 with high precision in the atmosphere contaminated with lubricating oil or the like. The magnetic sensor 14 in the housing 37 supplies the controller unit 17 with its detection signals in accordance with the discriminating marks 13 on the rotating shaft 36. With the angular position of the rotating shaft 36 being detected with high accuracy, the precious angular position of the permanent magnet 35 with respect to the stator 34 of the AC generator 23 may be applicable to the operational control of the AC generator 23.

While the present invention has been described in its preferred embodiments, it is to be understood that the words which have been used are words of description rather than limitation and that changes within the purview of the appended claims may be made without departing from the true scope and spirit of the invention in its broader aspects.

## Claims

1. A moving body of ceramics mounted for movement with respect to a base member(2,19), wherein descriminating marks(3,13) are provided on the periphery of the moving body, the discriminating marks (3,13) being composed of magnetic stripes of predetermined widths so as to be detected by a magnetic sensor(4,14), and the movement of theceramic moving body is controlled in response with detection signals in accordance with the discriminating marks(3,13).

2. A moving body according to claim 1, wherein the ceramic moving body is of a rotating member(11).

3. A moving body according to claim 1, wherein the ceramic moving body is of a linear sliding member(1).

4. A moving body according to claim 1, wherein the discriminating marks on the periphery of the ceramic moving body are composed of a composite of ceramics with iron.

5. Means for detecting position of the ceramic moving body mounted for movement with respect to the base member(2,19), wherein the discriminating marks(3, 13) are provided around the periphery of the ceramic moving body, the discriminating marks(3,13) extending in the direction across the advance direction of the moving body with predetermined widths at predetermined locations, and a magnetic sensor(4,14) is provided on the base member(2,19) for reading out the discriminating marks(3,13); and wherein the discriminating marks(3,13) are composed of magnetic recognition marks(5,15) and nonmagnetic recognition marks(6,16), the magnetic recognition marks(5,15) being formed of a paste containing iron therein and the nonmagnetic recognition marks(6,16) being formed of a paste containing powdered silicon nitride, both of which are alternately applied on a sheet in the form of stripes with predetermined widths, and the moving body is impregnated with the sheet under pressure to thereby form the discriminating marks(3,13) thereon.

6. Position detecting means according to claim 5, wherein the moving body is of a shaft(1) mounted for linear sliding movement with respect to the base member (2,19), and the magnetic stripes in the descriminating marks(3,13) are printed in such a manner as to extend in the peripheral direction of the shaft(1) at locations spaced from each other along the axial direction of the shaft(1).

7. Position detecting means according to claim 5, wherein the moving body is of a shaft(11,26,36) mounted for rotation with respect to the base member(2,19), and the magnetic stripes in the discriminating marks(3,13) are printed in such a manner as to extend in the axial direction of the shaft(11,26,36) at locations spaced from each other circumferentially of the shaft(11,26, 36).

8. Position detecting means according to claim 5, wherein the discriminating marks(3,13) are formed on the moving body by the steps of, impregnating a roasted body of Si₃N₄ for the moving body with the sheet under pressure, and then sintering the roasted body.

9. Position detecting means according to claim 5, wherein the paste for the magnetic recognition marks(5, 15) is composed of silicon nitride of in the range from 75 to 93% by weight, an additive of from 2 to 10% by weight selected from the group consisting of Al₂O₃ and Y₂O₃, and Fe₃O₄ of from 5 to 15% by weight.

10. Position detecting means according to claim 5, wherein the surface of the moving body is printed with the paste containing the powdered silicon nitride therein with exception of the surface zones having formed thereon the discriminating marks(3,13).

11. Position detecting means according to claim 5, wherein the magnetic sensor(4,14) is a position sensor, which moves across the discriminating marks(3,13) and reads out the widths of the discriminating marks(3,13) to thereby determine the position of the moving body.

12. Position detecting means according to claim 5, wherein the magnetic sensor(4,14) is combined with a time sensor to thereby provide a velocity sensor for detecting the velocity and acceleration of the moving body.
